# FASCICULE DE BREVET EUROPEEN

(11) **EP 2 127 845 B1**
(45) Date de publication et mention de la délivrance du brevet: **11.05.2011**
(21) Numéro de dépôt: 09161432.1
(22) Date de dépôt: 28.05.2009
(51) Int. Cl.: B29C 45/14, B60R 13/02, B60N 2/46, B29L 31/58

(54) **Procédé amélioré de fabrication d'une pièce formant accoudoir pourvue d'un revêtement de confort**
Verbessertes Herstellungsverfahren eines Teils, das eine Armstütze mit Komfortüberzug bildet
Improved method for manufacturing a piece forming an armrest equipped with a comfort coating

(30) Priorité: 29.05.2008 FR 0853543
(43) Date de publication de la demande: 02.12.2009
(73) Titulaire: EUROSTYLE SYSTEMS, 36000 Châteauroux (FR)
(72) Inventeur: Fantin, Claude, 36120 Maron (FR); Tirlemont, Christophe, 36330, LE POINÇONNET (FR)
(74) Mandataire: Thinat, Michel

(56) Documents cités:
- EP-A- 1 645 398
- WO-A-2006/056691
- DE-A1-102005 060 147
- JP-A- 2005 343 054

## Description

L'invention concerne un procédé de fabrication d'une pièce pour un panneau d'habillage intérieur d'un véhicule automobile, tel qu'une pièce formant accoudoir.

Une pièce de ce type définit une paroi centrale convexe permettant à un utilisateur d'y poser le coude, et deux parois planes d'extrémité prolongeant la paroi centrale.

Elle est généralement constituée par l'assemblage d'une couche de support rigide formée par un matériau thermoplastique injectable, d'un revêtement de confort constitué d'un matériau compressible et donnant à la pièce son moelleux, et d'une couche d'aspect assurant l'esthétique de la pièce.

Un procédé connu de fabrication d'une telle pièce comprend une étape de fixation du revêtement dans une configuration plane par ses parois d'extrémité entre une partie femelle d'un moule à injection et une partie mâle du moule et pourvue d'une forme proéminente convexe ; une étape de fermeture du moule, par laquelle la forme proéminente emboutit le revêtement et incurve la partie de ce revêtement qui lui est située en regard ; et une étape d'injection de matière plastique sous le revêtement une fois le moule fermé.

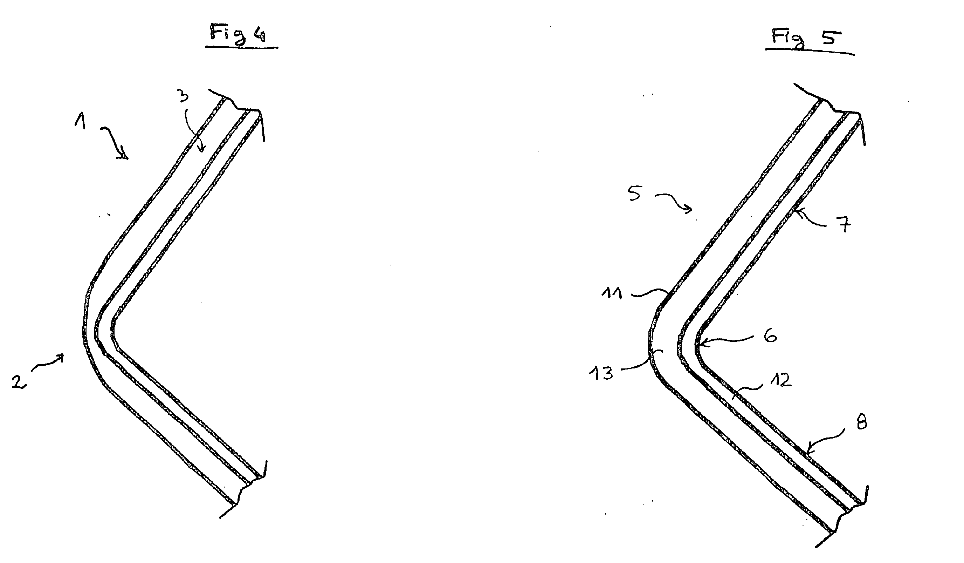

Une pièce réalisée selon ce procédé connu est repérée par la référence 1 sur la figure 4.

Elle présente au niveau de sa forme convexe 2 une moindre épaisseur de revêtement 3, due à l'étirement selon deux sens opposés du revêtement 3 lors de l'étape de fermeture du moule.

Ce profil irrégulier du revêtement 3 implique logiquement un confort irrégulier pour l'utilisateur. De plus, toujours du fait de l'étirement du revêtement durant la phase de fermeture, les éventuelles coutures de style couramment formées au sein du revêtement pour lui donner un aspect « fait main » peuvent être mal positionnées.

L'invention vise à pallier ces inconvénients. Le document JP-A-2009 34 3054 montre une moule selon le préambule de la revendication 1.

A cet effet, l'invention concerne un moule selon la revendication 1 et un procédé selon la revendication 7.

Selon l'invention, le procédé comprend, durant la fermeture du moule, une étape de maintien de la partie de revêtement à incurver dans une forme prédéterminée.

Selon une autre caractéristique, l'étape de maintien de la partie de revêtement à incurver, comprend une étape d'application d'une pression sur cette partie de revêtement pour plaquer cette partie contre la forme proéminente (19) durant la fermeture du moule, et en ce que, après la fermeture du moule et préalablement à l'injection de matière plastique, le procédé comprend une étape de libération de la partie de revêtement de la pression de maintien (P).

Selon encore une autre caractéristique, la pression de maintien (P) est supérieure à la tension exercée sur cette partie de revêtement par les fixations des parties d'extrémité du revêtement lors de la fermeture du moule.

L'application de la pression de maintien (P) sur la partie du revêtement, est effectuée au moyen de la portion concave de la paroi interne de la partie femelle, disposée en regard de la forme proéminente de la partie mâle du moule, dite paroi concave (27), qui est rendue mobile, durant la fermeture du moule, entre une position de saillie extrême vis-à-vis des parois d'extrémité (28, 29) de la partie femelle, dans laquelle cette paroi concave (27) est appliquée contre la forme proéminente (19) alors que le moule est ouvert, et une position de légère saillie vis-à-vis des parois d'extrémité (28, 29) de la partie femelle, dans laquelle cette paroi (27) est appliquée contre la forme proéminente (19) alors que le moule est fermé.

De préférence, le déplacement de la paroi concave (27), depuis la position de saillie extrême jusqu'à la position de légère saillie est effectué au moyen de la forme proéminente (19) de la partie mâle (18) qui repousse cette paroi (27) lors de la fermeture du moule.

Selon un mode de réalisation possible, la libération de la partie de revêtement de la pression de maintien P, est effectuée par déplacement de la paroi concave (27) depuis la position de légère saillie à une position d'effacement vis-à-vis des parois d'extrémité (28, 29) de la partie femelle, dans laquelle la paroi concave (27) prolonge les parois d'extrémité (28, 29) de la partie femelle (16).

Dans ce cas, le déplacement de la paroi concave (27), depuis la position de légère saillie jusqu'à la position d'effacement, est actionné par exemple par un vérin.

Selon une autre caractéristique, le revêtement est un objet multicouche, comprenant successivement une couche d'aspect, une couche de confort et un envers, et en ce que l'étape de maintien de la partie de revêtement à incurver dans une forme prédéterminée, comprend une étape de fixation d'un insert de rigidification sur la couche d'envers du revêtement au moins au niveau de la partie de ce revêtement destinée à être incurvée pour former la paroi concave de la pièce.

De préférence, l'insert présente une rigidité supérieure à celle du revêtement.

Selon une variante, l'insert de rigidification est une feuille ou un non tissé.

Selon un mode de réalisation possible, le procédé comprend une étape de fabrication d'un revêtement pourvu d'une couche d'aspect, d'une couche de confort et d'un envers par assemblage deux à deux de ces couches successives, et comprenant une étape de formation d'une couture de style sur le revêtement ainsi formé, la couture s'étendant au moins partiellement au niveau de la partie de ce revêtement destinée à être incurvée.

Dans ce cas, la couture de style traverse dans leurs épaisseurs, les couches d'aspect, de confort et d'envers du revêtement, l'insert étant fixé sur la couche d'envers, par exemple par collage.

Préférentiellement, la couture de style traverse dans leurs épaisseurs les couches d'aspect, de confort, d'envers du revêtement, et l'insert.

L'invention concerne également un moule à injection de matière plastique, pour la fabrication d'une pièce d'un panneau d'habillage interne d'un véhicule automobile, comprenant une partie mâle pourvue d'une forme proéminente convexe (19), une partie femelle (16) définissant une paroi interne de forme complémentaire de la partie mâle (18), et définissant une paroi centrale concave et deux parois d'extrémité.

Selon l'invention, la paroi concave de la partie femelle est montée mobile en translation par rapport aux parois d'extrémité, selon la direction de rapprochement des parties mâle et femelle du moule, entre une position de saillie extrême et une position d'effacement dans laquelle la paroi concave est située dans le prolongement des parois d'extrémité de la partie femelle, en passant par une position de légère saillie.

Selon une autre caractéristique, la partie mâle (18) est mobile entre une position d'ouverture du moule, et une position de fermeture en passant par une position intermédiaire de pré-fermeture, lorsque la partie mâle occupe la position de pré-fermeture, la paroi concave de la partie femelle (16) occupe la position de saillie extrême et est appliquée contre la forme proéminente (19) de la partie mâle (18), et lorsque la partie mâle est déplacée depuis la position de pré-fermeture jusqu'à la position de fermeture, la paroi concave (27) est déplacée depuis la position de saillie extrême jusqu'à la position de légère saillie en étant appliquée contre la forme proéminente (19) de la partie mâle durant tout le chemin de son déplacement.

Avantageusement, lorsque la partie mâle (18) occupe la position de fermeture, la paroi concave (27) de la partie femelle (16) est déplaçable depuis la position de légère saillie jusqu'à la position d'effacement.

De préférence, ce moule comprend un pavé (30) assurant la mobilité de la paroi concave (27), le pavé (30) étant formé au sein de la partie femelle (16), s'étendant selon la direction de rapprochement de la partie mâle (18) vers la partie femelle (16), et comprenant une paroi constituée par la paroi concave (27) de la partie femelle (16), ce pavé étant rendu mobile en translation selon la direction de rapprochement des parties mâle et femelle du moule par rapport aux parois d'extrémité, entre une position de saillie extrême et une position d'effacement, en passant par une position de légère saillie, dans lesquelles la paroi concave qu'il porte (27) occupe les positions de même nom.

Selon une variante de réalisation, ce moule comprend un mécanisme de déplacement (33) du pavé (30), comprenant une embase (40) montée sur l'extrémité du pavé (30) opposée à la paroi concave (27) et solidaire en translation de ce pavé (27), cette embase étant montée mobile entre une position plaquée contre une paroi intérieure avant (36) de la partie femelle, dans laquelle le pavé occupe la position de saillie extrême, et une position plaquée contre une paroi intérieure arrière (37) de la partie femelle, dans laquelle le pavé (30) occupe la position d'effacement.

Dans ce cas, le mécanisme de déplacement comprend au moins un moyen élastique (41, 42) rappelant l'embase (40) à la position dans laquelle le pavé (30) occupe la position de saillie extrême, la force de rappel de ce moyen élastique étant inférieure à la force de rapprochement de la forme proéminente (19) vers la partie femelle (16) lors de la fermeture du moule.

L'invention sera maintenant décrite en référence aux figures annexées parmi lesquelles :
- la figure 1 représente une vue en perspective d'un panneau habillage interne d'un véhicule automobile muni d'une pièce convexe fabriquée selon le procédé de l'invention ;
- la figure 2 illustre un agrandissement de la pièce de la figure 1 ;
- la figure 3 montre une variante de réalisation de la pièce de la figure 2 selon laquelle cette pièce comprend des coutures de style ;
- la figure 4 représente une vue de profil d'une pièce obtenue selon un procédé connu ;
- la figure 5 illustre le profil d'une pièce obtenue selon le procédé de l'invention ;
- les figures 6 à 9 sont des vues schématiques du moule de mise en oeuvre du procédé selon l'invention, durant les quatre étapes importantes successives de ce procédé ;
- la figure 10 représente une vue en perspective du revêtement de la pièce de la figure 3 ;
- la figure 11 illustre une vue de dessous du revêtement de la figure 10 ;
- la figure 12 représente le revêtement de la pièce de la figure 3 avec une variante de réalisation, selon laquelle le revêtement comprend un insert de rigidification appliqué le long de la couture de ce revêtement.

L'invention concerne un procédé de fabrication d'une pièce convexe destiné à former un accoudoir pour un panneau d'habillage interne d'un véhicule automobile.

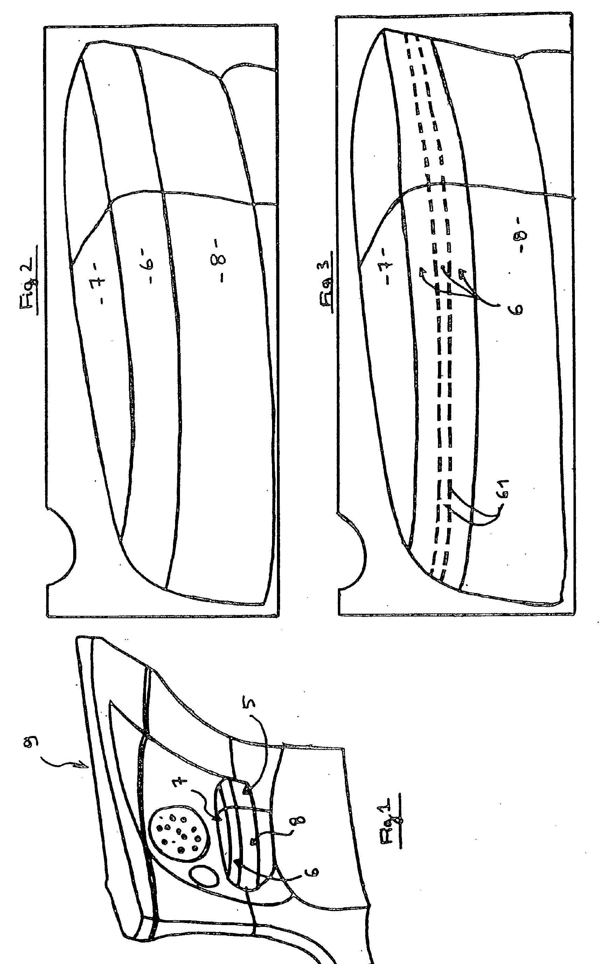

Telle que représentée sur la figure 1, la pièce à fabriquer 5 comprend une paroi intermédiaire convexe 6 et deux parois latérales d'extrémité 7 et 8 qui prolongent la paroi centrale convexe 6 et s'étendent respectivement horizontalement et verticalement par rapport au panneau d'habillage 9 qu'elles complètent.

Selon la figure 5, cette pièce 5 est constituée par une superposition de couches successives à savoir une couche d'aspect extérieure 11, un revêtement de confort 12 et une couche de support rigide 13 obtenue par injection de matière thermoplastique.

Le procédé de fabrication selon l'invention permet d'éviter la déformation du revêtement de confort 12 durant l'étape de fermeture du moule des procédés classiques.

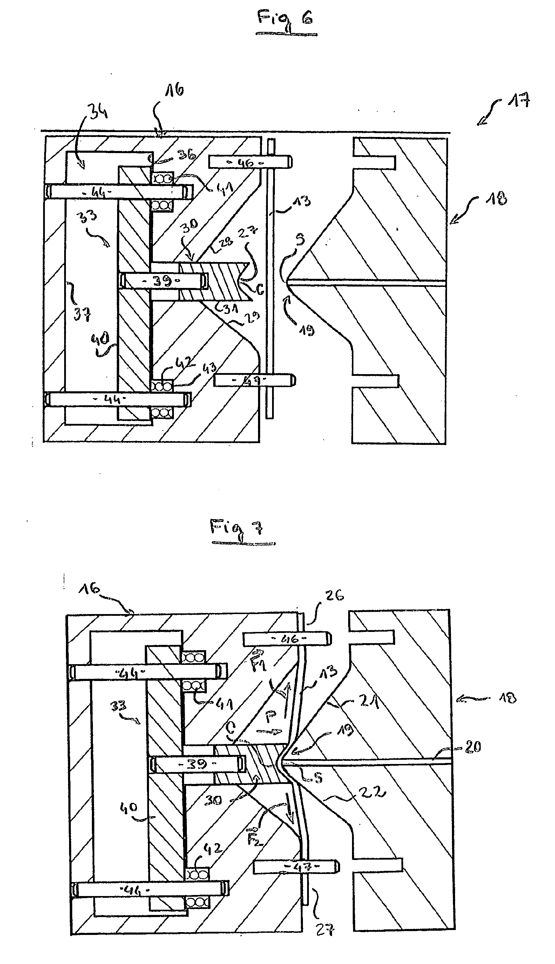

Il comprend de façon similaire aux procédés de type connu, une étape représentée sur la figure 6, assurant fixation du revêtement 13 dans une configuration plane par ses extrémités entre une partie femelle 16 d'un moule à injection 17, et une partie mâle 18 de ce moule qui est pourvue d'une forme proéminente convexe 19.

Une fois le revêtement fixé dans cette configuration plane, la partie mâle du moule 18 est rapprochée de la partie femelle 16 qui est fixe, et emboutit par sa forme proéminente 19 la partie de revêtement 13 qui lui est située en regard, tandis que les extrémités du revêtement 13 s'appliquent progressivement contre les parois planes 21, 22 de la partie mâle 18, tel que représenté sur la figure 7.

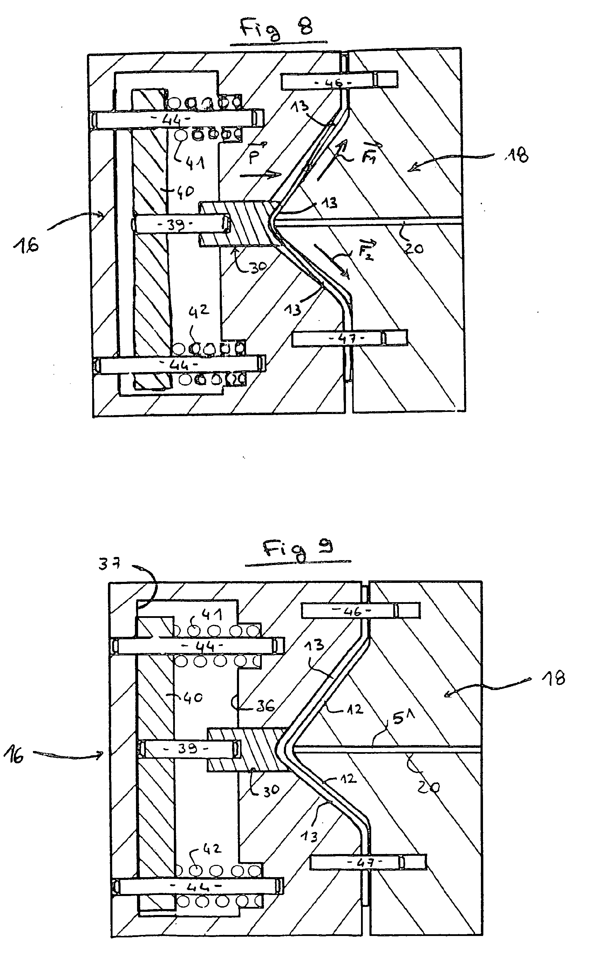

Une fois le moule fermé, tel que représenté sur la figure 9, la partie mâle 18 et la partie femelle 16 définissent ensemble une cavité de forme complémentaire de la pièce à former dans laquelle le revêtement embouti 13 est logé. L'espace libre de cette cavité est alors rempli de matière plastique injectée.

Une fois l'injection terminée, la pièce ainsi formée est refroidie entre la partie mâle et la partie femelle du moule et est ensuite extraite de ce moule.

Mais contrairement aux procédés de type connu, le procédé selon l'invention comprend une étape de maintien du revêtement 13 durant la fermeture du moule qui permet d'assurer un profil et un confort régulier pour le revêtement, ainsi qu'un positionnement correct de ce dernier.

Ce maintien consiste, selon un premier mode de réalisation, à appliquer durant la fermeture du moule, une pression P sur la partie de revêtement située en regard de la forme proéminente 19 et s'étendant de part et d'autre du sommet longitudinal S de la forme proéminente 19 de la partie mâle 18 du moule, cette pression étant supérieure aux forces d'étirement F1, F2 exercées par les fixations des extrémités 26, 27 du revêtement 13 lors de la fermeture du moule.

Il est obtenu grâce à un moule à injection de conception particulière.

Comme visible sur les figures 6 à 9, le moule de mise en oeuvre du procédé selon l'invention comprend une partie mâle identique à celle des moules existant mais une partie femelle 16 qui en diffère considérablement.

En effet, la paroi concave 27 de la partie femelle, c'est-à-dire la portion de la partie femelle définissant un creux longitudinal C complémentaire du sommet S de la partie mâle, et s'étendant de part et d'autre de ce creux sur environ 5 cm est montée mobile en translation par rapport aux parois internes planes 28, 29 de la partie femelle 16 selon la direction de rapprochement de la partie mâle 18 vers la partie femelle 16, c'est-à-dire horizontale.

La paroi concave 27 peut occuper une position de saillie extrême représentée sur les figures 6 et 7 et dans laquelle elle est apte à s'appliquer contre la forme proéminente 19 de la partie mâle 18 alors que le moule est ouvert.

L'autre position d'extrémité de la paroi concave 27 est une position d'effacement telle que représentée sur la figure 9, dans laquelle elle prolonge exactement les parois latérales planes 28 et 29 de la partie femelle 16 de façon à définir une paroi interne sans aucune aspérité pour cette partie femelle 16. Dans cette position de la paroi concave, la partie de revêtement située en regard de la forme proéminente 19 est libérée de la pression de maintien P et libère à son tour l'extrémité d'injection du conduit 20 de la partie mâle 16, de façon à autoriser la libération de matière plastique en fusion dans la cavité du moule.

La paroi concave 27 peut occuper en outre toutes les positions intermédiaires entre la position de saillie extrême et la position d'effacement.

Notamment, la paroi concave 27 peut occuper une position de légère saillie, illustrée sur la figure 8, dans laquelle elle est suffisamment en saillie par rapport aux parois planes 28, 29, alors que le moule est fermé, et applique encore sur le revêtement une pression supérieure aux forces d'étirement F1, F2.

Ainsi, de la position de saillie extrême à la position de légère saillie, la paroi concave 27 est appliquée contre le revêtement et est apte à le plaquer contre la forme proéminente de la partie mâle, avec une pression supérieure aux forces d'étirement F1, F2, exercées sur les extrémités du revêtement.

Pour assurer cette mobilité de la paroi concave 27 de la partie femelle, une portion entière de cette partie femelle est montée mobile par rapport au reste.

Plus précisément, cette portion est constituée par un pavé de forme générale parallélépipédique s'étendant selon la direction de rapprochement des parties mâle et femelle du moule. La base de ce pavé la plus proche de la partie mâle est constituée par la paroi concave 27 de la partie femelle, la partie latérale 31 est découpée dans la masse de la partie femelle et la base arrière est plane et la plus éloignée de la partie mâle 18.

Ce pavé est monté mobile en translation selon la direction horizontale entre une position de saillie extrême et une position d'effacement, en passant par une position de saillie légère, dans lesquelles la paroi concave 27 occupe respectivement les positions de même nom.

La mobilité du pavé 30 est obtenue au moyen d'un mécanisme de déplacement 33 logé au sein d'un évidement interne 34 de la partie femelle 16 et qui définit une paroi avant 36 proche de la partie mâle 18 et une paroi arrière 37.

Ce mécanisme 33 comprend :
- un axe 39 de support du pavé 30, s'étendant selon la direction de rapprochement, qui est logé à l'arrière du pavé 30 dans un évidement prévu à cet effet,
- une embase perpendiculaire à la direction de rapprochement qui est montée à l'extrémité arrière de l'axe de support 39, et
- deux ressorts de compression 41, 42 disposés de part et d'autre de l'axe de support 39 et dont chacun comprend une extrémité en appui contre l'embase 41, l'extrémité opposée étant en appui au sein d'un lamage 43 réalisé dans la paroi avant 36 de l'évidement 34 de la partie femelle 16, et apte à loger entièrement le ressort concerné 41, 42 dans sa position de repos.

Chaque ressort est monté autour d'un axe s'étendant dans la direction de rapprochement et traversant l'embase 41 dans son épaisseur.

Dans la position de repos des ressorts 41, 42 (figure 6), l'embase 41 est en appui contre la paroi avant 36 de l'évidement 34, tandis que le pavé mobile qui lui est solidaire en translation, occupe la position de saillie extrême.

Dans la position étirée des ressorts 41, 42 de la figure 9, l'embase 41 est plaquée contre la paroi arrière de l'évidement interne 33 et la pavé, qui lui est solidaire, occupe la position d'effacement, à laquelle il autorise l'injection de matière plastique.

Pour fabriquer une pièce 1 à l'aide d'un moule de ce type, on fixe le revêtement 13 dans sa configuration plane par les broches 46, 47 de la partie femelle qui tendent le revêtement 13 par ses extrémités, alors que la partie mâle 16 du moule occupe une position d'ouverture.

Disposé de la sorte, le revêtement recouvre la cavité de la partie femelle 16 ainsi que le pavé 27 dans sa position de saillie extrême.

Durant la fermeture du moule, la partie mâle 18 vient à occuper une position de pré-fermeture, dans laquelle sa forme proéminente 19 vient au contact du revêtement 13 et encastre ce revêtement 13 au sein de la paroi avant 27 du pavé mobile sous jacent 30. A ce stade, la paroi avant 27 du pavé mobile 30 maintient la partie de revêtement s'étendant au niveau du sommet S de la forme proéminente 19 de la partie mâle 18 et de part et d'autre de ce sommet S, contre cette forme proéminente.

Pour poursuivre son déplacement vers sa position de fermeture, la partie mâle 18 du moule doit vaincre la force de rappel des ressorts 41, 42 par application d'une pression P sur le revêtement et sur le pavé sous-jacent, supérieure à cette force de rappel.

La raideur des ressorts 41, 42 est choisie de façon appropriée pour que la pression P nécessaire pour vaincre leur force de rappel soit supérieure aux tensions d'étirement exercées par les fixations des extrémités du revêtement lors de la fermeture du moule. Il est important que le maintien du revêtement se fasse au niveau du sommet S de la forme proéminente de la partie mâle et aux abords de ce sommet S pour préserver cette partie de revêtement des forces d'étirement F1, F2, qui tendent à en réduire l'épaisseur et lors de l'utilisation de l'accoudoir finalement formé, le confort ressenti par un utilisateur.

Une fois cette force de rappel vaincue, la partie mâle, le pavé 30, l'axe 39, et l'embase 41 se déplacent de façon concomitante vers une position de fermeture, alors que le revêtement est toujours maintenu contre la forme proéminente 19 de la partie mâle.

Lorsque la partie mâle 18 a finalement atteint sa position de fermeture telle que représentée sur la figure 8, le pavé 30 est toujours en contact du revêtement et occupe la position de légère saillie par rapport aux parois planes 28 et 29 de la partie femelle.

A ce stade, le moule est fermé et il est nécessaire de reculer le pavé 30 à la position d'effacement pour définir un espace libre d'injection entre le revêtement 13 et la forme proéminente 19 de la partie mâle 18.

Pour ce faire, le mécanisme de déplacement du pavé 30 est actionné par un vérin qui permet le déplacement de l'ensemble pavé 30, axe 29 et embase 41 vis-à-vis de la forme proéminente 19 dans un sens l'éloignement de cette dernière jusqu'à ce que le pavé 30 occupe la position d'effacement de la figure 9.

Avantageusement, les propriétés du revêtement sont choisies pour éviter que les tensions d'étirement existant au sein des parties planes du revêtement ne soient transmises à la partie incurvée du revêtement lors du recul du pavé 30.

Par exemple, le revêtement peut être constitué d'un matériau développant une friction importante au contact de la forme proéminente 19 de la partie mâle 18 qui permet de retenir la partie centrale du revêtement dans sa position incurvée.

Une mousse convient très bien pour développer, après avoir été maintenue contre celle-ci par la pression de maintien, une telle friction et une force de contact importante au contact de la forme proéminente du moule.

Une autre possibilité est que le revêtement soit constitué d'un matériau présentant des propriétés lui assurant une déformation plastique, de sorte que les parties planes légèrement étirées durant la fermeture du moule restent dans cet état étiré et n'étirent pas à son tour la partie incurvée du revêtement lors du recul du moule.

Une toute autre possibilité est que ce soit la surface de la forme proéminente 19 qui présente des propriétés permettant de maintenir la partie centrale du revêtement dans sa forme incurvée lors du recul du pavé 30, en étant par exemple d'une certaine rugosité.

Grâce à l'étape de maintien ci-dessus décrite, la partie centrale du revêtement est correctement positionnée au sein de la cavité du moule et l'espace libéré par le pavé peut permettre l'écoulement de matière plastique en fusion depuis le conduit 51 réalisé au sein de la partie mâle jusqu'au point culminant de la forme proéminente 19.

La matière plastique est alors injectée sur la couche de revêtement destinée à être non visible et se rigidifie lors de son refroidissement.

La pièce obtenue présente le profil régulier tel que représenté sur la figure 5 étant donné que durant toute la phase de fermeture du moule, on a évité l'étirement de la partie incurvée du revêtement 13 grâce à la pression qui a été appliquée contre cette partie et qui a toujours été supérieure à la force d'étirement exercée aux deux extrémités de ce revêtement par leurs fixations.

En outre, grâce à cette étape de maintien, la partie centrale du revêtement 13 est positionnée de façon précise par rapport à la forme proéminente 19 de la partie mâle.

La possibilité d'obtenir un positionnement précis est particulièrement appréciable lorsque le revêtement comprend des coutures de style, tel que représenté sur la figure 3.

En effet, lorsqu'une couture 61 est réalisée au niveau de la partie de revêtement 13 à incurver, celle-ci se retrouve durant la fermeture du moule à être pincée entre le pavé 30 et la forme proéminente 19 et est donc maintenue dans une position précise jusqu'à la fermeture complète du moule et donc jusqu'à l'injection de matière plastique.

Ainsi, pour fabriquer par exemple une pièce dont une couture 61 parcourt une première paroi plane 7, la paroi convexe 6 et la deuxième paroi plane 8 de la pièce, sans aucune ondulation, il suffit de réaliser une couture s'étendant d'une extrémité à l'autre du revêtement de la figure 6 et cette couture sera maintenue durant la fermeture du moule en son centre par le pavé et à ses extrémités par les broches. Il y a donc trois points d'ancrage de cette couture qui permettront d'éviter toute ondulation dans la pièce fabriquée.

Lorsque la couture de style 61 est uniquement disposée le long de la paroi convexe 6 de la pièce à fabriquer, il suffira de former cette couture au niveau de la partie du revêtement 13 destinée à être située en regard de la forme proéminente 19 du moule et celle-ci sera maintenue dans son intégralité par le pavé 30 durant la fermeture du moule, assurant ainsi un positionnement parfait de cette couture avant injection.

L'action du pavé 30 sur un revêtement comportant une couture est également avantageuse pour améliorer l'étanchéité du revêtement au droit des trous de couture lors de l'injection de matière plastique.

En effet, le pavé 30 qui applique une pression sur le revêtement 13 supérieure aux forces d'étirement qui s'y exercerait dans un moule de type standard, évite en conséquence l'étirement des trous de couture et diminue ainsi la perte d'étanchéité du à leur présence.

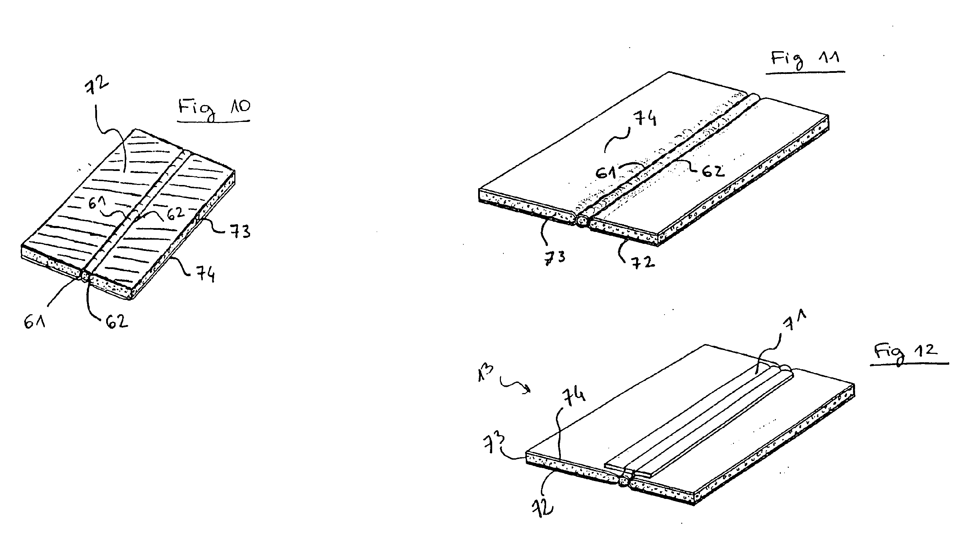

Selon un deuxième mode de réalisation de l'étape de maintien du revêtement durant la fermeture du moule du procédé selon l'invention, et particulièrement bien adaptée dans le cas d'un revêtement muni de couture, on double ce revêtement par un insert de rigidification 71 tel que représenté sur la figure 12 qui est disposé à l'envers de ce revêtement le long de la couture, cet envers étant illustré sur la figure 11.

Cet insert est de préférence constitué par une couche de non tissée ou une feuille.

La présence de cet insert à l'envers du revêtement augmente la rigidité de celui-ci dans la zone de couture et réduit les risques d'ondulation de cette couture, ce qui en assure le maintien.

De même, l'augmentation de la rigidité du revêtement permet de réduire le phénomène de perte d'épaisseur ci-dessus décrit lors de la fermeture du moule.

En outre, cet insert augmente l'étanchéité de la couture.

Selon le premier mode de réalisation d'un revêtement 13 pourvu d'une couture et d'un insert de rigidification 71 longeant celle-ci, on superpose et on assemble l'une à l'autre une couche d'envers 72, une couche de mousse 73 et une couche d'aspect 74, et on réalise une couture traversant les trois couches 72 à 74.

On colle ensuite le long de la couture l'insert de rigidification 71 côté envers 74. L'insert colmate les trous de couture et augmente ainsi l'étanchéité du revêtement formé et rigidifie celui-ci au droit des coutures.

Selon un second mode de réalisation d'un revêtement pourvu d'une couture et d'un insert, on superpose et on assemble les unes aux autres les couches 72 à 74 d'envers, de mousse, d'aspect ainsi que l'insert sur la couche d'envers et on réalise la couture dans l'épaisseur du revêtement formé.

Bien que les trous de couture traversent le revêtement dans son épaisseur, le nombre de couches à traverser par la matière plastique est plus important que dans le cas d'un revêtement dépourvu d'insert, ce qui limite les risques de passage de cette matière plastique jusqu'à la couche d'aspect du revêtement, augmentant ainsi son étanchéité.

L'insert de rigidification tel que décrit ci-dessus peut bien évidemment être disposé sur une partie de revêtement qui ne serait pas destinée à être incurvée au sein de la pièce, c'est-à-dire sur une partie de revêtement qui resterait plane au sein de la pièce à fabriquer.

Par exemple, lorsque les coutures de style sont uniquement présentes sur les parois planes de la pièce à réaliser, on les forme sur les parties correspondantes du revêtement destinées à rester planes, on fixe l'insert au droit de ces coutures et on introduit le revêtement renforcé par cet insert au sein du moule.

Dans ce cas, l'insert de rigidification présente l'intérêt de rigidifier les parties de revêtement destinées à rester planes et évite ainsi leur ondulation durant la fermeture du moule. De plus, il augmente toujours l'étanchéité du revêtement durant la phase d'injection de matière plastique.

De façon plus générale, l'insert de rigidification peut venir renforcer un revêtement au droit de ses coutures, quelque soit la forme de la pièce à réaliser, qu'elle soit plane, convexe ou concave.

L'insert assurera toujours la fonction de rigidification du revêtement et empêchera ainsi la formation d'ondulation indésirée au droit des coutures, et la fonction d'augmenter l'étanchéité du revêtement durant l'injection de matière plastique.

Bien entendu, le maintien, la rigidification et l'étanchéité du revêtement apportés par l'insert 71 peut aussi bien être assuré dans un moule de type classique que dans un moule muni d'un pavé mobile 30 tel que décrit ci-dessus.

Ce dernier cas présente l'intérêt majeur de combiner l'effet de rigidification et d'étanchéité de l'insert avec l'effet d'application de pression et d'empêchement de l'étirement procuré par le pavé du moule.

## Revendications

1. Moule à injection de matière plastique, pour la fabrication d'une pièce d'un panneau d'habillage interne d'un véhicule automobile, comprenant une partie mâle pourvue d'une forme proéminente convexe (19), une partie femelle (16) définissant une paroi interne de forme complémentaire de la partie mâle (18), et définissant une paroi centrale concave et deux parois d'extrémité, **caractérisé en ce que** la paroi concave de la partie femelle est montée mobile en translation par rapport aux parois d'extrémité, selon la direction de rapprochement des parties mâle et femelle du moule, entre une position de saillie extrême et une position d'effacement dans laquelle la paroi concave est située dans le prolongement des parois d'extrémité de la partie femelle, en passant par une position de légère saillie.

2. Moule selon la revendication 1, **caractérisé en ce que** la partie mâle (18) est mobile entre une position d'ouverture du moule, et une position de fermeture en passant par une position intermédiaire de pré-fermeture, **en ce que** lorsque la partie mâle occupe la position de pré-fermeture, la paroi concave de la partie femelle (16) occupe la position de saillie extrême et est appliquée contre la forme proéminente (19) de la partie mâle (18), et **en ce que** lorsque la partie mâle est déplacée depuis la position de pré-fermeture jusqu'à la position de fermeture, la paroi concave (27) est déplacée depuis la position de saillie extrême jusqu'à la position de légère saillie en étant appliquée contre la forme proéminente (19) de la partie mâle durant tout le chemin de son déplacement.

3. Moule selon la revendication 2, en ce que lorsque la partie mâle (18) occupe la position de fermeture, la paroi concave (27) de la partie femelle (16) est déplaçable depuis la position de légère saillie jusqu'à la position d'effacement.

4. Moule selon la revendication 3, **caractérisé en ce qu'**il comprend un pavé (30) assurant la mobilité de la paroi concave (27), le pavé (30) étant formé au sein de la partie femelle (16), s'étendant selon la direction de rapprochement de la partie mâle (18) vers la partie femelle (16), et comprenant une paroi constituée par la paroi concave (27) de la partie femelle (16), ce pavé étant rendu mobile en translation selon la direction de rapprochement des parties mâle et femelle du moule par rapport aux parois d'extrémité, entre une position de saillie extrême et une position d'effacement, en passant par une position de légère saillie, dans lesquelles la paroi concave qu'il porte (27) occupe les positions de même nom.

5. Moule selon la revendication 4, **caractérisé en ce qu'**il comprend un mécanisme de déplacement (33) du pavé (30), comprenant une embase (40) montée sur l'extrémité du pavé (30) opposée à la paroi concave (27) et solidaire en translation de ce pavé (27), cette embase étant montée mobile entre une position plaquée contre une paroi intérieure avant (36) de la partie femelle, dans laquelle le pavé occupe la position de saillie extrême, et une position plaquée contre une paroi intérieure arrière (37) de la partie femelle, dans laquelle le pavé (30) occupe la position d'effacement.

6. Moule selon la revendication 5, **caractérisé en ce que** le mécanisme de déplacement comprend au moins un moyen élastique (41, 42) rappelant l'embase (40) à la position dans laquelle le pavé (30) occupe la position de saillie extrême, la force de rappel de ce moyen élastique étant inférieure à la force de rapprochement de la forme proéminente (19) vers la partie femelle (16) lors de la fermeture du moule.

7. Procédé de fabrication d'une pièce pour un panneau d'habillage intérieur d'un véhicule automobile, telle qu'une pièce formant accoudoir moyennant un moule à injection selon l'une quelconque des revendications 1 à 6, la pièce définissant une paroi centrale convexe et deux parois planes d'extrémité prolongeant la paroi centrale, et comprenant une couche de support rigide constituée d'un matériau thermoplastique injectable, et un revêtement de confort comprenant un matériau compressible, le procédé comprenant une étape de fixation du revêtement de confort par ses parois d'extrémité dans une configuration plane, entre une partie femelle d'un moule à injection et une partie mâle du moule pourvue d'une forme proéminente convexe à sommet longitudinale, une étape de fermeture du moule, par laquelle la forme proéminente de la partie mâle emboutit le revêtement de confort, et incurve la partie de ce revêtement destinée à former la paroi centrale convexe, et une étape d'injection de matière plastique sous le revêtement de confort, durant la fermeture du moule, une pression étant appliquée sur la partie de revêtement destinée à former la paroi centrale convexe de la pièce, de part et d'autre du sommet (S) de la forme proéminente de la partie mâle pour plaquer cette partie contre la forme proéminente (19) durant la fermeture du moule, l'application de la pression de maintien (P) sur la partie de revêtement, étant effectuée au moyen de la portion concave de la paroi interne de la partie femelle.

8. Procédé selon la revendication 7, **caractérisé en ce que**, après la fermeture du moule et préalablement à l'injection de matière plastique, le procédé comprend une étape de libération de la partie de revêtement de la pression de maintien (P).

9. Procédé selon la revendication 8, **caractérisé en ce que** la pression de maintien (P) est supérieure à la tension exercée sur cette partie de revêtement par les fixations des parties d'extrémité du revêtement lors de la fermeture du moule.

10. Procédé selon la revendication 7, **caractérisé en ce que** le déplacement de la paroi concave (27), depuis la position de saillie extrême jusqu'à la position de légère saillie est effectué au moyen de la forme proéminente (19) de la partie mâle (18) qui repousse cette paroi (27) lors de la fermeture du moule.

11. Procédé selon la revendication 8, **caractérisé en ce que** la libération de la partie de revêtement de la pression de maintien P, est effectuée par déplacement de la paroi concave (27) depuis la position de légère saillie à une position d'effacement vis-à-vis des parois d'extrémité (28, 29) de la partie femelle, dans laquelle la paroi concave (27) prolonge les parois d'extrémité (28, 29) de la partie femelle (16).

12. Procédé selon la revendication 7, **caractérisé en ce que** le déplacement de la paroi concave (27), depuis la position de légère saillie jusqu'à la position d'effacement, est actionné par exemple par un vérin.

13. Procédé selon l'une des revendications 7 à 12, **caractérisé en ce que** le revêtement est un objet multicouche, comprenant successivement une couche d'aspect, une couche de confort et un envers, et **en ce que** l'étape de maintien de la partie de revêtement à incurver dans une forme prédéterminée, comprend une étape de fixation d'un insert de rigidification sur la couche d'envers du revêtement au moins au niveau de la partie de ce revêtement destinée à être incurvée pour former la paroi convexe de la pièce.

14. Procédé selon l'une des revendications 7 à 13, comprenant une étape de fabrication d'un revêtement pourvu d'une couche d'aspect, d'une couche de confort et d'un envers par assemblage deux à deux de ces couches successives, et comprenant une étape de formation d'une couture de style sur le revêtement ainsi formé, la couture s'étendant au moins partiellement au niveau de la partie de ce revêtement destinée à être incurvée.

## Claims

1. A plastic injection mold, for manufacturing a part of an inner lining panel of a motor vehicle, comprising a male part having a convex prominent shape (19), a female part (16) defining an internal wall having a shape matching the male part (18), and defining a concave center wall and two end walls, **characterized in that** the concave wall of the female part is movably mounted in translation to the end walls, in the direction of moving the male and female parts of the mold closer, between an outermost protruding position and a retracted position, in which the concave wall is located in the extension of the end walls of the female part, while going through a slightly protruding position.

2. The mold according to claim 1, **characterized in that** the male part (18) is movable between an opening position of the mold and a closing position, passing through an intermediate pre-closure position, **in that** when the male part occupies the pre-closure position, the concave wall of the female part (16) occupies the outermost protruding position and is applied against the prominent shape (19) of the male part (18), and **in that** when the male part is moved from the pre-closure position to the closing position, the concave wall (27) is moved from the outermost protruding position to the slightly protruding position while being applied against the prominent shape (19) of the male part on the entire displacement path thereof.

3. The mold according to claim 2, **characterized in that** with the male part (18) occupying the closing position, the concave wall (27) of the female part (16) is movable from the slightly protruding position to the retracted position.

4. The mold according to claim 3, **characterized in that** it comprises a block (30) ensuring mobility of the concave wall (27), the block (30) being formed within the female part (16), extending in the direction of moving the male part (18) closer to the female part (16), and comprising a wall consisting of the concave wall (27) of the female part (16), this block being made translatable along the direction of moving the male and female parts of the mold closer with respect to the end walls, between an outermost protruding position and a retracted position, passing through a slightly protruding position, in which the concave wall carried thereby (27) occupies the positions of the same name.

5. The mold according to claim 4, **characterized in that** it comprises a mechanism (33) for moving block (30), comprising a base (40) mounted on the end of the block (30) opposite the concave wall (27) and integral in translation with this block (27), this base being movably mounted between a position pressed against a front interior wall (36) of the female part, in which the block occupies the outermost protruding position, and a position pressed against a rear interior wall (37) of the female part, in which the block (30) occupies the retracted position.

6. The mold according to claim 5, **characterized in that** the displacement mechanism comprises at least one elastic means (41, 42) returning the base (40) to the position in which the block (30) occupies the outermost protruding position, the return force of this elastic means being lower than the force of moving the prominent shape (19) closer to the female part (16) at mold closure.

7. A method for manufacturing a part for an inner lining panel of a motor vehicle, such as an armrest part, by means of an injection mold according to any of claims 1 to 6, the part defining a convex center wall and two planar end walls extending the center wall, and comprising a rigid support layer composed of an injectable thermoplastic material, and a comfort cover comprising a compressible material, the method comprising a step of fastening the comfort cover by the end walls thereof in a flat configuration, between a female part of an injection mold and a male part of the mold having a convex prominent shape with a longitudinal top, a step of closing the mold, by which the prominent shape of the male part will stamp the comfort cover, and bend the part of this cover for forming the convex center wall inward, and a step of injecting plastic under the comfort cover, at mold closure, pressure being applied to the cover part for forming the convex center wall of the part, on either side of the top (S) of the prominent shape of the male part so as to press this part against the prominent shape (19) at mold closure, with the application of the holding pressure (P) to the cover part being performed by means of the concave portion concave of the internal wall of the female part.

8. The method according to claim 7, **characterized in that** after mold closure and prior to plastic injection, the method comprises a step of releasing the cover part from the holding pressure (P).

9. The method according to claim 8, **characterized in that** the holding pressure (P) is greater than the stress exerted on this cover part by the fixtures of the end parts of the cover at mold closure.

10. The method according to claim 7, **characterized in that** the displacement of the concave wall (27) from the outermost protruding position to the slightly protruding position is performed by means of the prominent shape (19) of the male part (18) pushing this wall (27) back at mold closure.

11. The method according to claim 8, **characterized in that** releasing the cover part from the holding pressure P is performed by moving the concave wall (27) from the slightly protruding position to a retracted position opposite the end walls (28, 29) of the female part, in which the concave wall (27) is extending the end walls (28, 29) of the female part (16).

12. The method according to claim 7, **characterized in that** moving the concave wall (27) from the slightly protruding position to the retracted position is actuated e.g. by a cylinder.

13. The method according to any of claims 7 to 12, **characterized in that** the cover is a multilayer object, successively comprising a decorative layer, a comfort layer and a backing, and **in that** the step of maintaining the cover part to be bent inward into a predetermined shape, comprises a step of fastening a rigidifying insert to the backing layer of the cover at least at the part of this cover to be bent inward so as to form the convex wall of the part.

14. The method according to any of claims 7 to 13, comprising a step of manufacturing a cover having a decorative layer, a comfort layer, and a backing by joining these successive layers two by two, and comprising a step of forming an ornamental seam on the cover thus formed, the seam extending at least partially at the part of this cover to be bent inward.

## Patentansprüche

1. Kunststoff-Spritzform zum Herstellen eines Teils einer Innenauskleidungstafel eines Kraftfahrzeugs, umfassend eine Patrize, die mit einer konvexen vorspringenden Form (19) versehen ist, eine Matrize (16), die eine Innenwand mit einer zu der Patrize (18) passenden Form definiert und eine konkave mittlere Wand und zwei Endwände definiert, **dadurch gekennzeichnet, dass** die konkave Wand der Matrize im Verhältnis zu den Endwänden in einer Richtung zum Zusammenrücken von Patrize und Matrize der Spritzform von einer äußersten vorstehenden Position über eine leicht vorstehende Position in eine eingezogene Position, in der die konkave Wand sich in der Verlängerung der Endwände der Matrize befindet, translationsbeweglich montiert ist.

2. Spritzform nach Anspruch 1, **dadurch gekennzeichnet, dass** die Patrize (18) von einer Öffnungsposition der Spritzform über eine dazwischenliegende Vorschließposition in eine Schließposition beweglich ist, dass wenn die Patrize die Vorschließposition einnimmt, die konkave Wand der Matrize (16) die äußerste vorstehende Position einnimmt und an die vorspringende Form (19) der Patrize (18) angelegt wird, und dass wenn die Patrize von der Vorschließposition in die Schließposition verschoben wird, die konkave Wand (27) von der äußersten vorstehenden Position in die leicht vorstehende Position verschoben wird und dabei an die vorspringende Form (19) der Patrize auf ihrem gesamten Verschiebungsweg angelegt wird.

3. Spritzform nach Anspruch 2, **dadurch gekennzeichnet, dass** wenn die Patrize (18) die Schließposition einnimmt, die konkave Wand (27) der Matrize (16) von der leicht vorstehenden Position in die eingezogene Position verschiebbar ist.

4. Spritzform nach Anspruch 3, **dadurch gekennzeichnet, dass** sie einen Block (30) umfasst, der die Beweglichkeit der konkaven Wand (27) sicherstellt, wobei der Block (30) innerhalb der Matrize (16) gebildet wird und sich in der Richtung zum Zusammenrücken der Patrize (18) mit der Matrize (16) erstreckt und eine Wand umfasst, die aus der konkaven Wand (27) der Matrize (16) besteht, wobei dieser Block in der Richtung zum Zusammenrücken von Patrize und Matrize der Spritzform im Verhältnis zu den Endwänden von einer äußersten vorstehenden Position über eine leicht vorstehende Position in eine eingezogene Position, in denen die konkave Wand (27), die er trägt, die gleichnamigen Positionen einnimmt, translationsbeweglich gemacht wird.

5. Spritzform nach Anspruch 4, **dadurch gekennzeichnet, dass** sie einen Mechanismus (33) zum Verschieben des Blocks (30) umfasst, umfassend einen Ansatz (40), der am Ende des Blocks (30) montiert ist, welcher der konkaven Wand (27) gegenüberliegt und mit diesem Block (27) translationsmäßig einstückig ist, wobei dieser Ansatz zwischen einer Position, die an eine vordere Innenwand (36) der Matrize angedrückt ist, in welcher der Block die äußerste vorstehende Position einnimmt, und einer Position, die an eine hintere Innenwand (37) der Matrize angedrückt ist, in welcher der Block (30) die eingezogene Position einnimmt, beweglich montiert ist.

6. Spritzform nach Anspruch 5, **dadurch gekennzeichnet, dass** der Verschiebungsmechanismus mindestens ein elastisches Mittel (41, 42) umfasst, das den Ansatz (40) in die Position zurückstellt, in welcher der Block (30) die äußerste vorstehende Position einnimmt, wobei die Rückstellkraft dieses elastischen Mittels geringer ist als die Kraft zum Zusammenrücken der vorspringenden Form (19) mit der Matrize (16), wenn die Spritzform geschlossen wird.

7. Verfahren zum Herstellen eines Teils für eine Innenauskleidungstafel eines Kraftfahrzeugs, wie etwa eines Armlehnenteils, mittels einer Spritzform nach einem der Ansprüche 1 bis 6, wobei das Teil eine konvexe mittlere Wand und zwei die mittlere Wand verlängernde ebene Endwände definiert und eine starre Trägerschicht, die aus einem spritzfähigen Thermoplast besteht, und einen Komfortbezug, der ein zusammendrückbares Material umfasst, umfasst, wobei das Verfahren einen Schritt des Befestigens des Komfortbezugs an seinen Endwänden in einer ebenen Konfiguration zwischen einer Matrize einer Spritzform und einer Patrize der Spritzform, die mit einer konvexen vorspringenden Form mit Längsspitze versehen ist, einen Schritt des Schließens der Spritzform, bei dem die vorspringende Form der Patrize den Komfortbezug eindrückt und den Teil dieses Bezugs einwärts krümmt, der dazu gedacht ist, die konvexe mittlere Wand zu bilden, und einen Schritt des Einspritzens von Kunststoff unter den Komfortbezug während des Schließens der Spritzform umfasst, wobei Druck auf den Bezugsteil, der dazu gedacht ist, die konvexe mittlere Wand des Teils zu bilden, auf beiden Seiten der Spitze (S) der vorspringenden Form der Patrize ausgeübt wird, um diesen Teil an die vorspringende Form (19) während des Schließens der Spritzform anzudrücken, wobei das Anlegen des Haltedrucks (P) auf den Bezugsteil anhand des konkaven Abschnitts der Innenwand der Matrize erfolgt.

8. Verfahren nach Anspruch 7, **dadurch gekennzeichnet, dass** nach dem Schließen der Spritzform und vor dem Einspritzen von Kunststoff das Verfahren einen Schritt des Freilassens des Bezugsteils von dem Haltedruck (P) umfasst.

9. Verfahren nach Anspruch 8, **dadurch gekennzeichnet, dass** der Haltedruck (P) größer ist als die Spannung, die auf diesen Bezugsteil durch die Halterungen der Endteile ausgeübt wird, wenn die Spritzform geschlossen wird.

10. Verfahren nach Anspruch 7, **dadurch gekennzeichnet, dass** das Verschieben der konkaven Wand (27) von der äußersten vorstehenden Position in die leicht vorstehende Position anhand der vorspringenden Form (19) der Patrize (18), welche diese Wand (27) zurückdrängt, wenn die Spritzform geschlossen wird, erfolgt.

11. Verfahren nach Anspruch 8, **dadurch gekennzeichnet, dass** das Freilassen des Bezugsteils von dem Haltedruck P durch das Verschieben der konkaven Wand (27) von der leicht vorstehenden Position in eine gegenüber den Endwänden (28, 29) der Matrize eingezogene Position, in der die konkave Wand (27) die Endwände (28, 29) der Matrize (16) verlängert, erfolgt.

12. Verfahren nach Anspruch 7, **dadurch gekennzeichnet, dass** das Verschieben der konkaven Wand (27) von der leicht vorstehenden Position in die eingezogene Position z.B. durch einen Zylinder betätigt wird.

13. Verfahren nach einem der Ansprüche 7 bis 12, **dadurch gekennzeichnet, dass** der Bezug ein mehrschichtiges Objekt ist, das nacheinander umfasst eine Dekorschicht, eine Komfortschicht und eine Unterlage umfasst, und dass der Schritt des Festhaltens des in eine vorbestimmte Form einwärts zu krümmenden Bezugsteils einen Schritt des Befestigens einer Versteifungseinlage auf der Unterlagenschicht des Bezugs mindestens an dem Teil dieses Bezugs, der dazu gedacht ist, einwärts gekrümmt zu werden, um die konvexe Wand des Teils zu bilden, umfasst.

14. Verfahren nach einem der Ansprüche 7 bis 13, umfassend einen Schritt des Herstellens eines Bezugs, der mit einer Dekorschicht, einer Komfortschicht und einer Unterlage zum paarweisen Zusammenbauen dieser aufeinanderfolgenden Schichten versehen ist, und umfassend einen Schritt des Bildens einer Ziernaht auf dem somit gebildeten Bezug, wobei sich die Naht mindestens teilweise an dem Teil dieses Bezugs erstreckt, der dazu gedacht ist, einwärts gekrümmt zu werden.
